# EUROPÄISCHE PATENTSCHRIFT

(11) **EP 3 210 948 B1**
(45) Veröffentlichungstag und Bekanntmachung des Hinweises auf die Patenterteilung: **04.12.2019**
(21) Anmeldenummer: 17157565.7
(22) Anmeldetag: 23.02.2017
(51) Int. Cl.: C03C 17/00, B23K 26/00, B41M 5/26, B44C 1/00, B44D 5/00

(54) **BESCHICHTETER GLAS- ODER GLASKERAMIKARTIKEL**
COATED GLASS OR GLASS CERAMIC ARTICLE
ARTICLE EN VITROCERAMIQUE OU EN VERRE REVETU

(30) Priorität: 28.02.2016 DE 102016103524; 31.08.2016 DE 102016116262
(43) Veröffentlichungstag der Anmeldung: 30.08.2017
(73) Patentinhaber: SCHOTT AG, 55122 Mainz (DE)
(72) Erfinder: WALDSCHMIDT, Holger, 55234 Nieder-Wiesen (DE); WAGNER, Fabian, 55118 Mainz (DE); SPIER, Martin, 55457 Horrweiler (DE)
(74) Vertreter: Blumbach · Zinngrebe Patentanwälte PartG mbB

(56) Entgegenhaltungen:
- WO-A1-2013/084120
- WO-A1-2014/135296

## Beschreibung

Die Erfindung betrifft allgemein Glas- oder Glaskeramikartikel, welche mit einer blickdichten Beschichtung versehen sind. Insbesondere betrifft die Erfindung derartige Artikel, die mit leuchtenden Anzeigeelementen versehen oder für eine Ausstattung mit leuchtenden Anzeigeelementen vorgesehen sind.

Aus dem Stand der Technik sind Glaskeramik-Kochfelder bekannt, die auf ihrer Unterseite beschichtet sind, um die Anmutung zu ändern, sowie auch, um unter der Glaskeramik verbaute Teile des Herdes zu verbergen.

Eine Möglichkeit hierzu sind Sol-Gel-Beschichtungen. Diese sind recht temperaturbeständig und zeichnen sich auch durch eine gute Haftung an der Glaskeramik-Platte aus. Um die inneren Teile eines Herdes zu verdecken, werden typischerweise opake Beschichtungen verwendet.

Für einige Anwendungen ist es dabei wünschenswert, wenn die Beschichtung nicht vollflächig ist, sondern Fenster aufweist. Solche Fenster werden insbesondere vor leuchtenden Anzeigeelementen angeordnet, so dass diese Anzeigeelemente durch die Glaskeramikplatte hindurch leuchten und für einen Bediener, welcher die Nutzseite des Kochfelds betrachtet, sichtbar ist. Teilweise werden diese Fenster durch transluzente Beschichtungen abgedeckt, um den ästhetischen Eindruck zu verbessern. Bei gleichem Farbton wird dadurch eine homogene Fläche erzeugt.

Bei Kochfeldern werden heute mittels Siebdruck Symbole, Zeichen oder sonstige Logos und Designs gedruckt. Allerdings ist es hier schwierig, sehr feine Strukturen, wie beispielsweise dünne Linien zu erzeugen.

Außerdem ist durch den Siebdruck in sehr feinen Bereichen oder Ausläufen von Linien die Reproduzierbarkeit aufgrund des Siebdruckgewebes erschwert. Des Weiteren ist für jede neue Produktanfrage/Designänderung die Anfertigung eines neuen Siebes nötig, wodurch Rüstkosten sehr hoch sind, was sich gerade bei kleinen Serien stark bemerkbar macht. Das Herstellen von individuellen Designs für jeden Endkunden ist daher teuer.

Bei mehrschichtigen Beschichtungen besteht zudem bei einer Drucktechnik wie dem Siebdrucken das Problem, dass eine deckungsgleiche Strukturierung hier schwierig ist. Daher wird bei mehrschichtigen Beschichtungen hier üblicherweise ein größeres Fenster in einer der Beschichtungslagen freigelassen und eine weitere Beschichtungslage im Bereich des Fensters genauer mit dem gewünschten Muster zu strukturieren. Das Fenster kann aber insbesondere bei leuchtenden Anzeigeelementen sichtbar sein, wenn die genauer strukturierte Beschichtungslage nicht vollständig lichtundurchlässig ist.

Die Druckschrift WO 2013/084120 A1 betrifft eine Platteneinheit eines Kochfeldes, welche eine Beschichtung aufweist, die einen keramischen Anschein erwecken soll. Die Beschichtung ist auf der Außenseite der Platteneinheit aufgebracht. In einer Ausführungsform werden Ausnehmungen beschrieben, welche Löcher aufweisen. Die Löcher können im Siebdruckverfahren durch Auslassen gebildet werden.

Die EP 0 868 960 B1 schlägt ein Verfahren zur Herstellung von Steuerpultschildern, insbesondere für elektrische Haushaltsgeräte vor, bei welchem mindestens eine personalisierte Lasergravur auf mindestens einem Siebdruck hergestellt wird, welcher bereits auf einen Basis-Schildrohling aus Glas aufgebracht wurde, indem man durch Materialabnahme Dekore, Symbole oder entsprechende Zeichen in der Siebdruck-Schicht anbringt und indem man danach diese Gravuren durch manuelles oder automatisiertes Aufbringen mit einer Schicht unterschiedlicher Farbe überdeckt, was unmittelbar nach dem Gravurschritt oder in einem getrennten Arbeitsgang erfolgen kann.

Wie in der DE 10 2015 102 743.7 der Anmelderin beschrieben, können mit sehr dünnen freigestellten Linien oder Punkten (< 40 µm) in einer Farbschicht Lichtapplikationen in Kochflächen erzeugt werden, die einen sogenannten Deadfront-Effekt zeigen, also bei ausgeschalteter Lichtquelle mit dem Auge nicht sichtbar sind. Solche feinen Strukturen lassen sich besonders gut durch Laserablation von Farbschichten auf transparenten Glassubstraten erzeugen. Durch die Feinheit der Strukturen ergibt sich gleichzeitig jedoch eine hohe Anforderung an die Genauigkeit der Positionierung von Leuchtelementen. Besonders bei Multi-Elementen, d.h. mehreren Lichtapplikationen auf einem Board, die sehr nahe zusammen liegen, kann es zu unschönem Lichtübersprung oder nicht ausgeleuchteten Bereichen kommen.

Für den konventionellen Siebdruck wurden hierfür spezielle Farben, sogenannte transluzente Farben entwickelt. Mit diesen Farben können größere, zusammenhängende freigestellte Bereiche in einer Farbschicht erneut hinterdruckt werden, in denen sich dann Lichtelemente leichter anordnen lassen. Die transluzenten Farben verhindern dabei die Einsicht unter die Glasplatte, lassen jedoch das Licht der Leuchtelemente hindurch. In ihrer Herstellung, sowie in der Verarbeitung sind sie allerdings teuer und erzeugen durch die geänderte Zusammensetzung einen anderen Farbeindruck in Draufsicht als die zuerst bedruckte, blickdichte Grundfarbe.

Aufgabe der Erfindung ist es daher, ein Verfahren zur Herstellung eines Glas- oder Glaskeramikartikels bereitzustellen, der die gewünschten optischen Eigenschaften aufweist, aber gegenüber des Einsatzes des Siebdruckverfahrens kostengünstiger herzustellen ist.

Diese Aufgabe wird durch den Gegenstand der unabhängigen Ansprüche gelöst. Vorteilhafte Weiterbildungen der Erfindung sind in den jeweiligen anhängigen Ansprüchen angegeben.

Demgemäß sieht die Erfindung ein Verfahren zur Herstellung eines Glas- oder Glaskeramikartikels vor, umfassend die Schritte
- Bereitstellen eines flächigen Glas- oder Glaskeramiksubstrats mit zwei gegenüberliegenden Seitenflächen, welches
- im sichtbaren Spektralbereich von 380 nm bis 780 nm eine Lichttransmission τᵥᵢₛ von mindestens 1%, bevorzugt mindestens 30% für sichtbares Licht aufweist, welches das Glas- oder Glaskeramiksubstrat von einer Seitenfläche zur gegenüberliegenden Seitenfläche durchquert, wobei
- eine Seitenfläche des Glas- oder Glaskeramiksubstrats mit einer blickdichten Beschichtung versehen wird, welche im sichtbaren Spektralbereich von 380 nm bis 788 nm eine Lichttransmission τᵥᵢₛ von höchstens 5% aufweist, wobei
- ein gepulster Laserstrahl auf die blickdichte Beschichtung gerichtet und durch Ablation die Beschichtung mehrfach an verschiedenen Stellen lokal bis zur Oberfläche des Glas- oder Glaskeramikartikels entfernt und damit ein einen perforierten Bereich bildendes Raster einer Vielzahl von Öffnungen in der blickdichten Beschichtung hergestellt wird, derart, dass die blickdichte Beschichtung in diesem Kernbereich des Rasters teiltransparent wird. Erfindungsgemäß wird das Raster bevorzugt aus Öffnungen oder aus Punkten gebildet, die in einem Abstand bzw. einem Punktabstand voneinander angeordnet sind und eine Größe aufweisen.
Der Abstand der Öffnungen ist hierbei kleiner als 200 µm, bevorzugt kleiner als 150 µm, besonders bevorzugt kleiner als 100 µm.

Die Größe der Öffnungen ist kleiner als 30 µm, bevorzugt kleiner als 20 µm.

Werden Abstand und Größe wie beschrieben gewählt, wirkt der perforierte Bereich, demnach der Kernbereich, wie eine transluzente Farbe und lässt größere Positionierungstoleranzen für Lichtelemente zu. Derartige Bereiche bieten bei mit Laser freigestellten Symbolen Vorteile. Die Symbole werden nämlich nicht durch den ablatierten Bereich in der Farbe definiert, sondern durch das Lichtelement selbst. Im Bedarfsfalle können auf diese Weise mit einer Glasplatte mehrere Produkte mit unterschiedlichen Symboliken adressiert werden.

Ein weiterer Prozessparameter für das erfindungsgemäße Verfahren ist der Anteil der ablatierten Fläche an der Gesamtfläche. Dieser Anteil wird beschrieben durch das Verhältnis aus ablatierter Fläche und nicht prozessierter Fläche innerhalb eines perforierten, teiltransparenten Bereichs, also des Kernbereichs. Die Erfinder haben herausgefunden, dass Kernbereiche mit einem ablatierten Flächenanteil größer als 0,5% der Gesamtfläche einen anderen farblichen Eindruck entwickeln. Das Verhältnis aus ablatierter Fläche und nicht prozessierter Fläche wird hierbei im Fall von punktförmigen Öffnungen gemäß der Formel (πr²·100%)/(a²) berechnet, wo r der Radius eines Punktes und a der Abstand zwischen zwei Punkten ist. Im Fall von andersförmigen Öffnungen ergibt sich der Anteil der ablatierten Fläche an der Gesamtfläche aus dem Verhältnis der addierten Fläche der Öffnungen zu der Fläche der nicht prozessierten Fläche innerhalb des perforierten, teiltransparenten Bereichs. Solche Bereiche wirken auf den Betrachter heller oder dunkler, je nach zugrunde liegendem Farbsystem. Bereiche mit ablatiertem Flächenanteil unterhalb von 1%, besonders unterhalb 0,5% der Gesamtfläche sind jedoch eher uninteressant, da Lichtanwendungen leicht verpixelt erscheinen. Um einen Bereich mit möglichst hoher Auflösung zu bekommen, sind daher Flächen mit einem ablatierten Flächenanteil von mehr als 0,8%, bevorzugt mehr als 1% besonders bevorzugt mehr als 1,5% zu wählen.

Um den unterschiedlichen Farbeindruck abzuschwächen bzw. zu eliminieren, wurde ein Übergangsbereich entwickelt, in dem der ablatierte Flächenanteil zwischen der Grundfläche, also dem Kernbereich, bis zum unablatierten Bereich mit <2%/mm, bevorzugt <1%/mm, besonders bevorzugt <0,5%/mm reduziert wird.

Dabei kann die Reduzierung derart erfolgen, dass der ablatierte Flächenanteil an der Seite des Übergangsbereiches, die an den nicht ablatierten Bereich angrenzt, bevorzugt bis auf kleiner 0,5% der Gesamtfläche reduziert wird.

Der Wert des Gradienten des Flächenanteils im Übergangsbereich kann sowohl im gesamten Übergangsbereich konstant sein, als auch variieren. Bei einem variierenden Gradienten beziehen sich die genannten Grenzwerte auf den entlang des Gradienten über die gesamte Breite des Übergangsbereichs gemittelten Mittelwert.

Daher liegt auch ein Verfahren im Rahmen der Erfindung, bei dem am Rande des perforierten Bereichs, also am Rande des Kernbereichs, ein Übergangsbereich entwickelt wird, in dem weitere Punkte ablatiert werden, so dass der Flächenanteil, beschrieben durch das Verhältnis aus ablatierter Fläche und nicht prozessierter Fläche, innerhalb des Übergangsbereichs im Mittel kleiner als im Kernbereich ist.

Der Flächenanteil der insgesamt ablatierten Fläche, umfassend den Kernbereich und den Übergangsbereich, kann unter 0,5% der Gesamtfläche betragen.

Derartige Flächenanteile können mit kleineren Öffnungen oder durch größeren Abstand der Öffnungen realisiert werden.

Ist das Glas- oder Glaskeramiksubstrat allerdings mit einem sehr hellen oder sehr dunklen Dekor versehen, so kann es sein, dass die beschriebene Maßnahme nicht ausreichend ist, da sich unter diesen Bedingungen kein ausreichender Deadfront-Effekt einstellen könnte. So können beispielweise Linien mit einer Breite von 20 µm vor allem auf einem hellen Dekor deutlich sichtbar werden.

Die Erfinder haben festgestellt, dass der Deadfront-Effekt durch das sogenannte Dithering verbessert werden kann. Dithering ist eine Technik, beispielsweise in der Computergraphik zur Erzeugung der Illusion einer größeren Farbtiefe, falls beispielsweise Bilder aufgrund technischer Restriktionen mit verringerter Farbtiefe wiedergeben werden müssen. Hierbei werden die fehlenden Farben durch eine bestimmte Anordnung der Pixel aus verfügbaren Farben nachgebildet. Dadurch werden harte Farbübergängevermieden, da das menschliche Auge das Dithering als Mischung einzelner Farben wahrnimmt.

Erfindungsgemäß werden Größe und Position der Öffnungen derart gewählt, dass im hinterleuchteten Zustand eine zusammenhängende, vorzugsweise freigestellte Struktur zu erkennen ist, während sich aber im ausgeschalteten Zustand ein ausreichender Deadfront-Effekt, welcher nachfolgend noch detaillierter beschrieben wird, einstellt.

Zu diesem Zweck wird die Aussparung in eine Vielzahl kleinerer Bereiche aufgeteilt, die je nach Bedarf angeordnet werden können und dabei mehr oder weniger Flächenanteil der eigentlichen Verteilung einnehmen.

Bevorzugt wird dabei eine stochastische oder irreguläre Verteilung der Öffnungen gewählt. Alternativ oder zusätzlich kann auch die Größe der Öffnungen, welche vorzugsweise als Punkte ausgebildet sind, vorzugsweise stochastisch variieren. Aufgrund der stochastischen Anordnung und/oder der Größe der einzelnen Öffnungen reduziert sich die Sichtbarkeit im ausgeschalteten Zustand und gleichzeitig bleibt die gewünschte Form im hinterleuchteten Zustand erhalten. Insbesondere wird hierdurch die Displayfähigkeit eines aus der Glas- oder Glaskeramikplatte hergestellten Kochfeldes erhöht, da aufgrund der stochastischen oder irregulären Anordnung Moire-Strukturen mit regulär angeordneten Bildelementen (Pixeln) eines Displays vermindert oder sogar vermieden werden können.

In der deutschen Patentanmeldung DE 10 2015 102 743 der Anmelderin wird beschrieben, dass die wahrgenommene Strukturbreite von feinen Aussparungen (< 80 µm) stark von der verwendeten Leuchtstärke der darunter liegenden Lichtquelle abhängt. Allgemein führt eine höhere Leuchtstärke zu einer Verbreiterung der wahrgenommenen Struktur.

Bei Veränderung der Leuchtstärke erscheinen Linienstrukturen unterschiedlich breit. Mittels anpassbarer Beleuchtungssysteme lassen sich so auf einer Kochfläche mit der gleichen Aussparung unterschiedliche Ausprägungen im hinterleuchteten Zustand darstellen ohne, dass die tatsächliche Strukturbreite verändert werden muss, was den Deadfronteffekt negativ beeinflussen könnte.

Diese Erkenntnis kann für das Dithering genutzt werden. Die Verteilung und der Grad an zufälligem, somit stochastischem oder irregulärem Versatz sowie der Größe der Öffnungen in der aufgeteilten Aussparung werden derart gewählt, dass sich im Zusammenspiel mit der Leuchtstärke eine geschlossene homogene Struktur im hinterleuchteten Zustand sowie ein zufriedenstellender Deadfront-Effekt im ausgeschalteten Zustand ergibt. Je größer die Leuchtstärke hierbei ist, desto kleiner kann der tatsächliche Anteil an Aussparungen sein. Letzteres begünstigt den Deadfront-Effekt in erwünschter Weise.

Somit liegt auch ein Verfahren zur Herstellung eines Glas- oder Glaskeramikartikels im Rahmen der Erfindung, bei dem die Abstände der Öffnungen oder Punkte variieren, insbesondere wenn diese Abstände zufällig verteilt und somit stochastisch variieren. Es liegt auch ein Verfahren zur Herstellung eines Glas- oder Glaskeramikartikels im Rahmen der Erfindung, bei dem die Größen der Öffnungen oder Punkte variieren, insbesondere wenn diese Größen der Öffnungen oder Punkte zufällig verteilt und somit stochastisch variieren.

Im Anschluss an den Schritt des Perforierens kann ein Reinigungsschritt erfolgen. Insbesondere kann dieser Reinigungsschritt mittels einer adhäsiven Rolle erfolgen.

Dem Schritt des Reinigens kann ein Verfahrensschritt folgen, bei dem der perforierte Bereich mittels einer Versiegelungsschicht, bevorzugt mit einer transparenten Versiegelungsschicht versehen wird. In einer besonderen Ausführungsform kann die transparente Versiegelungsschicht eingefärbt sein, bevorzugt mit Farbstoffen und/oder Pigmenten.

Das Material des Glas- oder Glaskeramiksubstrats kann derart gewählt werden, dass die Ablationsschwelle des Materials des Glas- oder Glaskeramikartikels im infraroten Spektralbereich, insbesondere bei einer Wellenlänge von 1064 nm, oder auch bei 532 nm, höher ist als die Ablationsschwelle der blickdichten Beschichtung.

Weiterhin ist vorteilhaft, wenn die blickdichte Beschichtung derart gewählt wird, dass sie eine Matrix eines oxidischen Netzwerks mit darin eingebetteten Dekorpigmenten umfasst. Ebenso ist es vorteilhaft, wenn die Matrix aus einem Sol-Gel-Material hergestellt wird, das nach dem Aushärten anorganisch oder organisch/anorganisch vernetzt ist.

Im Rahmen der Erfindung liegt ferner ein Glas- oder Glaskeramikartikel, der mittels des erfindungsgemäßen Verfahrens hergestellt wurde. Ein solcher Glas- oder Glaskeramikartikel weist ein Glas- oder Glaskeramiksubstrat mit zwei gegenüberliegenden Seitenflächen auf, wobei eine Seitenfläche des Glas- oder Glaskeramiksubstrats mit einer blickdichten Beschichtung versehen ist, welche im sichtbaren Spektralbereich von 380 nm bis 780 nm eine Lichttransmission τᵥᵢₛ von höchstens 5% aufweist, und wobei ein Bereich der blickdichten Beschichtung mit einem Raster von Öffnungen versehen ist, welche den Durchtritt von auf die Oberfläche der Beschichtung auftreffendem Licht durch die Beschichtung und das Glas- oder Glaskeramiksubstrat gestattet, so dass dieser Kernbereich teiltransparent erscheint, wobei der Abstand der Öffnungen bzw. der Punktabstand kleiner als 200 µm, bevorzugt kleiner als 150 µm, besonders bevorzugt kleiner als 100 µm ist, und wobei ferner ein Übergangsbereich am Rande des perforierten Kernbereichs ausgebildet ist, in dem weitere ablatierte Öffnungen vorhanden sind, so dass der ablatierte Flächenanteil , beschrieben durch das Verhältnis aus ablatierter Fläche und nicht prozessierter Fläche, innerhalb des Übergangsbereichs im Mittel kleiner als im Kernbereich ist.

Ein derartiger Glas- oder Glaskeramikartikel kann erfindungsgemäß die Bedienfläche eines Haushaltsgeräts bilden. Hierbei ist im Inneren des Haushaltsgeräts zumindest ein Leuchtelement angeordnet, so dass von diesem Leuchtelement abgestrahltes Licht auf die Öffnungen in der blickdichten Beschichtung fällt und die Öffnungen und das Substrat durchqueren kann.

Bei einem derartigen Haushaltsgerät kann die blickdichte Beschichtung auf der die Innenseite bildenden Seite des Glas- oder Glaskeramikartikels aufgebracht sein.

Das erfindungsgemäße Haushaltsgerät weist zumindest eine Leuchtdiode oder eine Laserdiode als Leuchtelement auf.

Ein solches Haushaltsgerät kann auch ein Streuelement oder einen seitenemittierenden Lichtleiter zur Verteilung des vom Leuchtelement abgestrahlten Lichts durch den perforierten Bereich aufweisen.

Eine weitere Anwendungsmöglichkeit für einen erfindungsgemäßen Glas- oder Glaskeramikartikel ist seine Anwendung als Bestandteil von Innenauskleidungen von Autos, wobei dieser Bestandteil ebenfalls zumindest eine Leuchtdiode oder eine Laserdiode aufweist. Die blickdichte Beschichtung weist in den Innenraum des Fahrzeugs.

Die Erfindung wird nachfolgend genauer anhand der beigeschlossenen Figuren beschrieben. In den Figuren verweisen gleiche Bezugszeichen auf gleiche oder entsprechende Elemente.

Es zeigen:
Fig. 1 einen beschichteten Glas- oder Glaskeramikartikel,
Fig. 2 eine Vorrichtung zur Laserablation für die Herstellung eines erfindungsgemäßen Glas- oder Glaskeramikartikels,
Fig. 3 einen mit dem Verfahren hergestellten Glas- oder Glaskeramikartikel,
Fig. 4 ein Glaskeramik-Kochfeld mit einem erfindungsgemäßen Glaskeramikartikel als Kochplatte,
Fig. 5 eine Ausführungsform mit einem seitenemittierenden Lichtleiter zur Beleuchtung des Punktrasters,
Fig. 6 eine Weiterbildung der in Fig. 3 dargestellten Ausführungsform
Fig. 7a - 7b eine schematische Darstellung zur Variation der Punktabstände,
Fig. 8a - 8f schematische Darstellungen für eine stochastische Verteilung der Punktabstände und Größen für verschiedene Verhältnisse aus ablatierter Fläche zur Gesamtfläche,
Fig. 9a eine Darstellung eines Ausschnitts eines Rasters mit punktförmigen Öffnungen, umfassend einen perforierten Kernbereich und einen perforierten Übergangsbereich, und
Fig. 9b eine weitere Darstellung eines Ausschnitts eines Rasters mit punktförmigen Öffnungen, umfassend einen perforierten Kernbereich und einen perforierten Übergangsbereich.

### Detaillierte Beschreibung bevorzugter Ausführungsformen

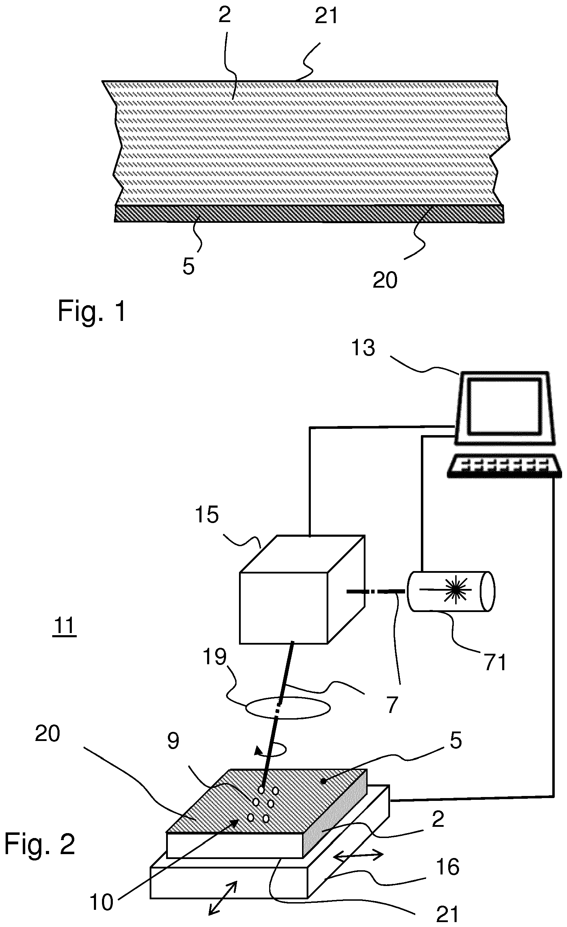

Um einen erfindungsgemäßen Glas- oder Glaskeramikartikel herzustellen, wird zunächst ein flächiges, beziehungsweise scheibenförmiges Glas- oder Glaskeramiksubstrat 2 bereitgestellt. Das Glas- oder Glaskeramiksubstrat 2 weist demgemäß zwei gegenüberliegende Seitenflächen 20, 21 auf. Eine der Seitenflächen, im in Fig. 1 gezeigten Beispiel die Seitenfläche 20, wird mit einer blickdichten oder lichtundurchlässigen Beschichtung 5 versehen.

Besonders bevorzugte Beschichtungen 5 sind anorganische und/oder anorganischorganisch modifizierte Sol-Gel-Schichten. Bevorzugt kann das oxidische Netzwerk aus SiO₂, TiO₂, ZrO₂, Al₂O₃-Bausteinen bestehen. Dabei können im Netzwerk noch organische Reste vorhanden sein.

Als Pigmente können insbesondere farbgebende Pigmente in Form von Metalloxiden hinzugesetzt werden, insbesondere Cobalt-Oxide/-Spinelle, Cobalt-Aluminium-Spinelle, Cobalt-Aluminium-Zink-Oxide, Cobalt-Aluminium-Silizium-Oxide, Cobalt-Titan-Spinelle, Cobalt-Chrom-Spinelle, Cobalt-Aluminium-Chrom-Oxide, Cobalt-Nickel-Mangan-Eisen-Chrom-Oxide/-Spinelle, Cobalt-Nickel-Zink-Titan-Aluminium-Oxide/-Spinelle, Chrom-Eisen-Nickel-Mangan-Oxide/- Spinelle, Cobalt-Eisen-Chrom-Oxide/-Spinelle, Nickel-Eisen-Chrom-Oxide/-Spinelle, Eisen-Mangan-Oxide/-Spinelle, Eisen-Oxide, Eisen-Chrom-Oxide, Eisen-Chrom-Zinn-Titan-Oxide, Kupfer-Chrom-Spinelle, Nickel-Chrom-Antimon-Titan-Oxide, Titan-Oxide, Zirkon-Silizium-Eisen-Oxide/-Spinelle.

Bevorzugt werden als Pigmente Absorptionspigmente, plättchen- oder stäbchenförmige Pigmente, beschichtete Effektpigmente z.B. auf Glimmerbasis. Ebenso kommen Pigmente wie Ruße, Graphit als auch Farbstoffe in Betracht.

Ebenso können die Schichten (Dekor-/ Versiegelungsschichten) weitere Bestandteile wie Füllstoffe, bevorzugt nanoskalige Füllstoffe aufweisen. Als Füllstoffe kommen hierbei insbesondere SiOₓ-Partikel, Aluminiumoxid-Partikel, pyrogene Kieselsäuren, Kalk-Natron-Partikel, Alkali-Aluminosilikat-Partikel, Polysiloxankugeln, Borosilikatglaskugeln und/oder Glashohlkugeln in Betracht.

Derartige Beschichtungen sind sehr haltbar und temperaturbeständig und lassen sich je nach Wahl der Dekorpigmente in einer nahezu unbegrenzten Anzahl verschiedener optischer Anmutungen herstellen. Dafür stellt gerade die Strukturierung solcher Beschichtungen eine Schwierigkeit dar, insbesondere, wenn ein hoher Pigmentanteil vorhanden ist, oder die einzelnen Pigmentpartikel relativ groß sind. Letzteres ist beispielsweise der Fall, wenn plättchenförmige Dekorpigmente eingesetzt werden, um Metallic- oder Glitzereffekte hervorzurufen. Das erfindungsgemäße Verfahren kann beim Erzeugen der Öffnungen oder Löcher hier sogar die einzelnen Pigmentpartikel durchtrennen und diese sauber schneiden.

Die Dekorpigmente und deren Menge in der Beschichtungszusammensetzung werden so ausgewählt, dass bei der vorgesehenen Schichtdicke der Beschichtung 5 deren Transmission im sichtbaren Spektralbereich kleiner als 5% ist. Gegebenenfalls kann diese niedrige Transmission auch durch eine mehrlagige Beschichtung erzielt werden.

Geeignete Beschichtungszusammensetzungen und daraus hergestellte Beschichtungen sind unter anderem aus der DE 10 2008 031 426 A1, sowie der DE 10 2008 031 428 A1 bekannt, deren Offenbarung diesbezüglich vollumfänglich auch zum Gegenstand der vorliegenden Anmeldung gemacht wird. Demnach kann in Weiterbildung der Erfindung eine blickdichte Beschichtung 5 hergestellt werden, indem in einem ersten Schritt die Dekorschicht mittels eines Sol-Gel-Verfahrens hergestellt wird, wobei die Schicht auf das Glas- oder Glaskeramik-Substrat aufgebracht und durch Einbrennen ausgehärtet wird, und in einem zweiten Schritt die Dekorschicht mit einer Versiegelungsschicht abgedeckt wird, die ebenfalls mittels eines Sol-Gel-Verfahrens hergestellt wird, wobei anorganische Dekorpigmente und Füllstoffe mit einem Sol vermischt werden, wobei die anorganischen Dekorpigmente plättchenförmige Pigment-Partikel und anorganische Festschmierstoff-Partikel umfassen, die in einem Verhältnis im Bereich von 10:1 bis 1:1 Gew.-%, bevorzugt 5:1 bis 1:1 Gew.-% und besonders bevorzugt 3:1 bis 1,5:1 Gew.-% zugegeben werden, und die erzeugte Mischung auf das Glaskeramik-Substrat mit der ausgehärteten Dekorschicht aufgebracht und anschließend bei erhöhten Temperaturen ausgehärtet wird. Die ausgehärtete Versiegelungsschicht kann die gleiche Zusammensetzung wie die ausgehärtete Dekorschicht 5 aufweisen, mit dem Unterschied, dass das Metalloxid-Netzwerk der Versiegelungsschicht mehr, bezogen auf die Anzahl der organischen Reste vorzugsweise mindestens 5 % mehr organische Reste als das Metalloxid-Netzwerk der Dekorschicht enthält. Unter einem Metalloxid-Netzwerk wird dabei auch ein oxidisches Netzwerk mit in elementarer Form halbleitenden Elementen verstanden (insbesondere also auch das bereits erwähnte SiO₂-Netzwerk).

Anders als vorstehend beschrieben, können aber auch andere Versiegelungsschichten verwendet werden. Neben den oben beschriebenen Sol-Gel-Versiegelungsschichten eignen sich beispielsweise auch Silikonschichten oder silikonbasierte Schichten dazu, eine darunterliegende Beschichtung zu versiegeln. Ebenso sind Versiegelungsschichten auf organischer Polymerbasis wie Polyurethane, Polyacrylate etc. möglich. Die Versiegelungsschichten können pigmentiert sein.

Die Versiegelungsschichten können transparent, eingefärbt transparent, transluzent oder opak sein. Bevorzugt sind pigmentierte Versiegelungsschichten.

Ebenso können auf der Seitenfläche keramische Farben, die speziell an die Anforderungen einer keramischen Unterseitenbeschichtung angepasst wurden, verwendet werden. Eine bevorzugte Ausführungsform dieser Erfindung sind Hybridschichten, wie in DE 10 2012 103507 A1 beschrieben.

Nach dem Herstellen der Beschichtung 5 wird nun mittels einer Vorrichtung zur Laserablation eine Vielzahl von Öffnungen oder Löchern 9 erzeugt, die insgesamt einen perforierten Bereich 10 bilden. Ein Beispiel einer solchen Vorrichtung 11 zeigt Fig. 2.

Die Vorrichtung zur Laserablation 11 umfasst einen Laser 71 und eine Einrichtung, um den vom Laser 71 erzeugten Laserstrahl 7 über die mit einer Beschichtung 5 beschichtete Seitenfläche 20 des Glas- oder Glaskeramiksubstrats 2 zu führen. Als Einrichtung zur Führung des Laserstrahls 7 über die Oberfläche kann beispielsweise ein Galvanometerscanner 15 verwendet werden.

Bei einigen Anwendungen ist, zusätzlich zur Perforation, die Aussparung von langen geraden Linien gewünscht, zum Beispiel bei Kochflächen, bei denen mit diesen Linien der Kochbereich abgegrenzt oder eine Kochzone markiert werden soll. Für lange, gerade Linien ist die Verwendung eines Polygonscanners von Vorteil, da es beim Stitching langer Linien schnell zu kleinem Versatz kommen kann. Durch den Versatz wird die Linie an der Übergangsstelle breiter und hat dadurch im Durchlicht den Anschein deutlich heller an dieser Stelle zu sein.

Wie in Fig. 2 dargestellt, kann alternativ oder zusätzlich zu einem Galvanometerscanner aber auch eine Einrichtung zur Bewegung des Glaskeramikelements 1 vorgesehen sein. Insbesondere eignet sich hierfür ein X-Y-Tisch 16, auch als Kreuztisch bezeichnet. Bei dieser Ausführungsform können der Laserstrahl 7 festgehalten und die Öffnungen 9 in der gewünschten Form durch Bewegen des X-Y-Tisches mit dem darauf angeordneten Glas- oder Glaskeramiksubstrat 2 in die Beschichtung 5 eingefügt werden.

Bevorzugt haben die Öffnungen oder Löcher die Gestalt kreisförmiger Punkte. Die Öffnungen können aber auch die Form länglicher Ovale haben. Auch andere Geometrien sind vorstellbar, z.B. parallele Linien.

Im Falle punktförmiger Öffnungen bilden diese Punke in ihrer Gesamtheit ein Punktraster. Der Abstand der einzelnen Öffnungen oder Punkte voneinander sollte unter 200 µm, bevorzugt unter 150 µm, besonders bevorzugt unter 100 µm liegen. Die Größe der Öffnungen oder die Punktgröße liegt unter 30 µm, bevorzugt unter 20 µm.

Um hohe Genauigkeiten beizubehalten, kann auch eine synchronisierte Scanner- und Bewegungsvorrichtung verwendet werden. Dabei wird die Bewegung des Tisches 16 oder einer anderen, das Substrat 2 bewegenden Einrichtung mit der Ablenkung des Scanners, beispielsweise dem Galvanometerscanner 15 synchronisiert.

Um den Laserstrahl 7 zur Erzielung einer möglichst hohen Intensität auf der Oberfläche zu fokussieren, kann eine geeignete Fokussierungsoptik 19 vorgesehen sein. Bei dem in Fig. 2 gezeigten Beispiel ist diese Fokussierungsoptik dem Galvanometerscanner 15 nachgeordnet. Es ist dem Fachmann ersichtlich, dass aber auch andere Konfigurationen möglich sind, die geeignet sind, den Laserstrahl 7 auf das Glaskeramikelement 1 zu fokussieren. Eine Anordnung der Fokussierungsoptik in Strahlrichtung hinter dem Galvanometerscanner ist günstig, um kurze Brennweiten zu erreichen. Allgemein, unabhängig vom speziellen Aufbau der Optik und Bewegungsmechanik, wie sie das Beispiel der Fig. 2 zeigt, wird eine Fokussierungsoptik, insbesondere eine Linse oder Linsengruppe oder ein fokussierender Spiegel mit einer Brennweite von weniger als 300 mm bevorzugt.

Um die Beschichtung 5 lokal zu entfernen und damit eine Öffnung 9 durch die Beschichtung 5 zu schaffen, wird der Laserstrahl 7 mit der Einrichtung zur Führung des Laserstrahls über die Oberfläche bewegt, wobei der Laser 7 so eingestellt ist, dass die Ablationsschwelle des Materials der Beschichtung 5 überschritten und damit die Beschichtung am Auftreffort entfernt wird. Dabei wird die Laserleistung jedoch so eingestellt das die Ablationsschwelle des Trägermaterials, also des Materials des Glases oder der Glaskeramik des Substrats 2 nicht erreicht wird und so nur die Beschichtung entfernt wird. Als Beispiel seien die unter den Namen Robax und Ceran Cleartrans vertriebenen Glaskeramiken genannt. Bei diesen Glaskeramiken liegt die Ablationsschwelle für eine Laserwellenlänge von 1064 nm bei etwa 5,2*10¹⁷ W/m².

Allgemein, ohne Beschränkung auf das spezielle, vorstehend diskutierte Ausführungsbeispiel ist es also vorteilhaft, wenn die Materialien des Glas- oder Glaskeramikmaterials und der blickdichten Beschichtung so gewählt sind, dass die Ablationsschwelle des Materials des Glas- oder Glaskeramiksubstrats 2 insbesondere im infraroten Spektralbereich, besonders bevorzugt bei einer Wellenlänge von 1064 nm höher ist, als die Ablationsschwelle der blickdichten Beschichtung 5.

Weiterhin ist es allgemein günstig, wenn die Schichtdicke der blickdichten Beschichtung nicht übermäßig groß ist. Dies erleichtert einerseits den Abtrag mittels Laserablation. Andererseits ist dies auch günstig für die Transmission des Lichts durch die Öffnungen 9 im Bereich 10 in der Beschichtung. Ist die Beschichtung zu dick, sind die Wandungen der Öffnungen 9 entsprechend lang und schlucken unnötig viel Licht. Es ist daher allgemein bevorzugt, wenn die blickdichte Beschichtung 5 eine Schichtdicke von höchstens 300 µm, besonders bevorzugt von höchstens 160 µm, besonders bevorzugt von höchstens 50 µm aufweist.

Umgekehrt sind aber auch zu dünne Beschichtungen ungünstig, insbesondere im Hinblick auf eine ausreichende Lichtblockung. Bevorzugt werden Schichtdicken von mehr als 3µm, vorzugsweise mindestens 5 µm. Bei den vorstehenden Angaben der Mindest- und Höchstdicke handelt es sich um Mittelwerte der Schichtdicke.

Die Einrichtung zur Führung des Laserstrahls wird mittels einer Steuerungseinrichtung 13 angesteuert. Auf dieser kann beispielsweise ein Programm ablaufen, welches die Form und den Ort des Strukturelements in Steuersignale übersetzt, mit welchen der Laserstrahl 7 mittels der Einrichtung zur Führung des Laserstrahls über die Oberfläche bewegt wird. Vorzugsweise steuert die Steuerungseinrichtung auch den Laser 7, insbesondere hinsichtlich eines An- und Abschaltens und der Laserintensität.

Gemäß einem Ausführungsbeispiel wurde ein gepulster Laser 71 gewählt, der sich ausreichend gut fokussieren lässt, um Punkte der genannten Dimensionen abzutragen. Dies wurde mit einem Neodym-YAG-Laser mit einer Wellenlänge von 1064 nm und einer Pulslänge von 10 ps erreicht. Es wurde ein Scanner mit einer Optik mit einer Brennweite von 255 mm eingesetzt. Der M²-Faktor ist kleiner als 1,4, bevorzugt kleiner als 1,2. Der Rohrstrahl hatte einen Durchmesser von 12 mm. Die mittlere Leistung W50 bei 200 kHz wurde auf etwa 4 W reduziert. Andere Laser sind ebenfalls möglich. Hier ist vor allem ein Laser mit einer Wellenlänge von 532 nm und einer Pulslänge von > 1 ns vorteilhaft, da durch die kleinere Wellenlänge eine bessere Fokussierung einstellbar ist und durch die längere Pulslänge das Material nicht gleichzeitig gefärbt wird, was bei hellen Farben nachteilig ist. Desweiteren haben Laser im ns-Bereich einen deutlichen Kostenvorteil vor Lasern im kurzen ps Bereich. Vorteilhaft ist es aber jedenfalls, wenn die Breite der abladierten Strukturen kleiner als 0,025 mm beträgt.

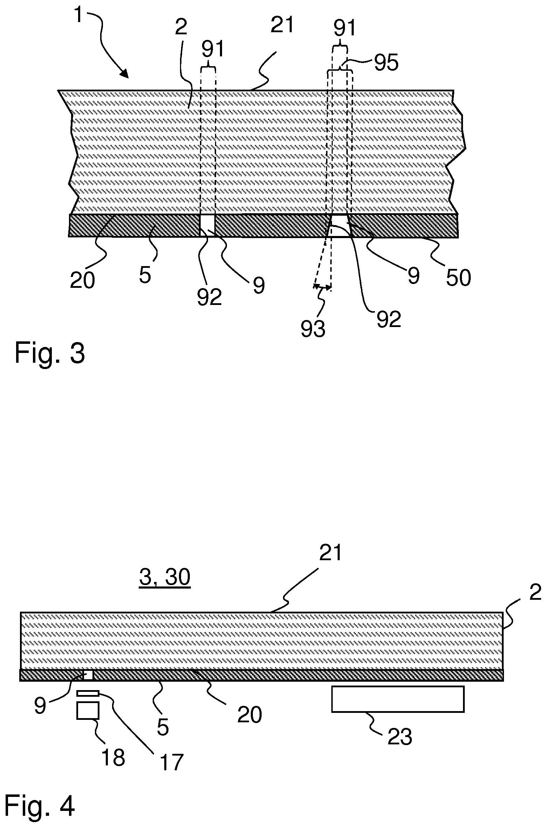

Fig. 3 zeigt schematisch im Querschnitt einen mit dem erfindungsgemäßen Verfahren hergestellten Glas- oder Glaskeramikartikel 1. In die blickdichte Beschichtung 5 ist eine Öffnung 9 eingefügt. Diese weist eine Breite 91 an der Unterseite der Beschichtung 5, beziehungsweise an der in der Öffnung freigelegten Substratoberfläche von höchstens 30 µm, vorzugsweise höchstens 20 µm.

Bei dem in Fig. 3 links gezeigten Beispiel ist die Wandung 92 der Öffnung 9 im Wesentlichen senkrecht. Gemäß einer weiteren Ausführungsform kann sich die Öffnung 9 auch von der Oberfläche 50 der Beschichtung zum Glas- oder Glaskeramik-Substrat 2 hin verengen. Ein Ausführungsbeispiel dazu ist die in Fig. 3 auf der rechten Seite dargestellte Öffnung 9. Eine solche Ausführungsform kann günstig sein, um eine Öffnung auch in dickere Beschichtungen 5 mit mehrfacher, beziehungsweise stufenweiser Ablation einzufügen. Vorzugsweise ist der Winkel 93 der Wandung 92 der Öffnung 9 zur Senkrechten der Substratoberfläche aber kleiner als 20°, vorzugsweise kleiner als 15°. Bei diesem Winkel handelt es sich um den mittleren Winkel der Wandung. Dieser kann in einfacher Weise durch das Verhältnis der Breite 91 der Öffnung am Substrat und der Breite 95 an der Oberfläche der Beschichtung 5, sowie der Dicke der Beschichtung 5 trigonometrisch ermittelt werden. Demgemäß gilt für die Dicke D der Beschichtung 5 und der Differenz B der Breiten 95, 91 nach dieser Ausführungsform: B/2D ≤ tan(20°), vorzugsweise B/2D ≤ tan(15°).

Bei den bevorzugten Schichtdicken und der erfindungsgemäßen maximalen Breite 91 der Öffnung am Substrat ist gemäß noch einer Ausführungsform allgemein auch die Bedingung erfüllt, dass die Breite 91 der Öffnung 9 kleiner ist, als die Schichtdicke der blickdichten Beschichtung 5.

Sowohl die im Verhältnis zur Schichtdicke geringere Breite der Öffnung, als auch der allenfalls geringe Winkel der Wandung 92 zur Senkrechten bewirken, dass bei bereits leicht schräger Betrachtung der Öffnung 9 die Blickachse nicht durch die Öffnung 9 geht, sondern an der Wandung 92 endet. Dies in Verbindung mit der geringen Breite 91 der Öffnung führt dazu, das die Öffnung für einen Betrachter unsichtbar bleibt. Diese kann erst wahrgenommen werden, wenn Licht einer Lichtquelle von der für den Betrachter aufgrund der lichtblockenden Beschichtung 5 verborgenen Seite des Glas- oder Glaskeramikartikels 1 durch die Öffnung hindurchgelangt.

Bei der Laserablation kann es allerdings zu dunklen Verfärbungen der Beschichtung kommen. Ist die Beschichtung selbst dunkel, bleibt eine solche Verfärbung und damit auch die Öffnung 9 unsichtbar. Anders ist dies allerdings bei Beschichtungen mit hellem Farbton. Hier kann sich die dunkle Verfärbung an den Rändern der Öffnung 9 sichtbar abzeichnen. Dem kann begegnet werden, indem die Pulsfrequenz des Lasers und die Geschwindigkeit, mit der der Laserstrahl über die Beschichtung geführt wird, so eingestellt werden, dass die Auftreffpunkte der Laserpulse nicht überlappen, was zu dem gewünschten Punktraster führt. Gemäß dieser Ausführungsform der Erfindung ist es damit auch möglich, für einen Betrachter unsichtbare Öffnungen auf einer blickdichten Beschichtung zu erzeugen, deren Farbe einen L-Wert im L*a*b-Farbraum von mindestens 20, bevorzugt von mindestens 40, besonders bevorzugt von mindestens 50 hat. Der L-Wert der Farbe der blickdichten Beschichtung kann beispielsweise mit einem Spektrophotometer bestimmt werden. Der Wert bezieht sich auf eine offen liegende Oberfläche der Beschichtung 5, also nicht etwa auf einen durch das Glas oder die Glaskeramik hindurch gemessenen Farbwert.

Um den thermischen Einfluss im Randbereich der zu erzeugenden Öffnung zu minimieren und so den Effekt einer Abdunkelung zu vermeiden, wird gemäß einer Weiterbildung der Erfindng ein TopHat-Profil des Laserstrahls 7 verwendet. Dabei werden die Randbereiche des zunächst Gauß-förmigen Strahls eliminiert, welche zu wenig Energie zum Ablatieren der Farbe haben, jedoch noch genug Energie, um die Beschichtung so weit zu erhitzen, dass sich diese verfärbt. Ein weiterer Vorteil eines TopHat-Profils ist die bessere Konturschärfe, da mit einem Gaußprofil Mehrschichtsysteme nicht konturscharf abgetragen werden, auch wenn dieser Effekt Unschärfen im Mikrometer-Bereich hervorruft, die mit dem Auge fast oder gar nicht sichtbar sind.

Besonders bevorzugt wird die Erfindung so eingesetzt, dass die Beschichtung auf der dem Benutzer abgewandten Seite 20 des Glas- oder Glaskeramiksubstrats 2 aufgebracht ist. Das Licht einer Lichtquelle passiert demnach zuerst die Beschichtung durch die Öffnung 9, dann das Glas- oder Glaskeramiksubstrat und tritt dann aus der gegenüberliegenden Seite 21 aus.

Die Erfindung lässt sich in vielfältiger Weise für hinterleuchtete Glas- oder Glaskeramikartikel von Haushaltsgeräten verwenden. Besonders geeignet ist die Erfindung hierbei für Kochfelder. Ebenfalls kann auch eine Bedienblende, etwa an einem Herd oder Backofen mit einem erfindungsgemäßen Glas- oder Glaskeramikartikel realisiert werden. Die blickdichte Beschichtung dient beim Haushaltsgerät dazu, einerseits eine bestimmte optische Anmutung zu erzeugen, andererseits auch die Komponenten des Haushaltsgerätes zu verbergen.

Allgemein, ohne Beschränkung auf die nachfolgend beschriebenen Ausführungsbeispiele betrifft die Erfindung dabei auch ein Haushaltsgerät mit einer Bedienfläche, welche durch den erfindungsgemäßen Glas- oder Glaskeramikartikel gebildet wird, wobei im Inneren des Haushaltsgeräts zumindest ein Leuchtelement angeordnet ist, so dass von diesem Leuchtelement abgestrahltes Licht auf die Öffnungen 9 des Bereichs 10 in der blickdichten Beschichtung 5 fällt und die Öffnungen 9 und das Substrat 2 durchqueren kann.

Fig. 4 zeigt ein Beispiel einer bevorzugten Ausführungsform eines solchen Haushaltsgeräts 3 in Gestalt eines Glaskeramik-Kochfelds 30, bei welchem die Kochplatte durch einen erfindungsgemäßen Glaskeramikartikel 1 gebildet wird.

Die blickdichte Beschichtung 5 ist unabhängig von der Art des Haushaltsgeräts 3 vorzugsweise auf der die Innenseite bildenden Seite 20 des Glas- oder Glaskeramiksubstrats 2 aufgebracht. Im Beispiel des Glaskeramik-Kochfelds 30 befindet sich die blickdichte Beschichtung 5 demgemäß auf der Unterseite des Substrats, hier dementsprechend ein Glaskeramiksubstrat 2. Unter dem Glaskeramiksubstrat 2 sind ein oder mehrere Heizelemente 23 angeordnet, um auf der Kochplatte, beziehungsweise auf der Seite 21 aufgestelltes Gargut oder Kochgeschirr zu erwärmen. Beispielsweise kann es sich bei dem oder den Heizelementen 23 um Induktionsspulen für einen Induktionsherd handeln.

Ohne Beschränkung auf das dargestellte Ausführungsbeispiel wird als Leuchtelement 18 eine Leuchtdiode eingesetzt. Je nach Ausgestaltung der Öffnung kann auch eine Anordnung mehrere Leuchdioden 18 verwendet werden. Letzteres bietet sich beispielsweise an, wenn die Öffnungen 9 sehr langgestreckt sind und möglichst gleichmäßig ausgeleuchtet werden sollen. Um durch die kleine Öffnung viel Licht hindurchzubekommen, besteht gemäß noch einer Ausführungsform der Erfindung auch die Möglichkeit, eine Laserdiode als Leuchtelement zu verwenden.

Allgemein, ohne Beschränkung auf das dargestellte Beispiel kann es weiterhin günstig sein, wenn ein Streuelement 17 vor dem Leuchtelement 18 angeordnet wird. Das Streuelement 17 erstreckt sich entlang einer grabenförmigen ausgeführten Öffnung 9 und sorgt dafür, dass das Licht des Leuchtelements 18 gleichmäßiger entlang der grabenförmigen Öffnung 9 verteilt wird. Damit wird eine gleichmäßigere Ausleuchtung des mit einer solchen grabenförmigen Öffnung 9 erzielten linienförmigen Anzeigeelements erreicht.

Das Anzeigeelement, welches durch die beleuchtete Öffnung 9 geschaffen wird, kann beispielsweise eine Kochzonenmarkierung sein. Mit einer solchen Markierung wird angezeigt, welche der Kochzonen gerade aktiv ist und beheizt wird. Beispielsweise kann sich dazu die grabenförmige Öffnung 9 ringförmig um den durch das Heizelement 23 beheizten Bereich herum erstrecken.

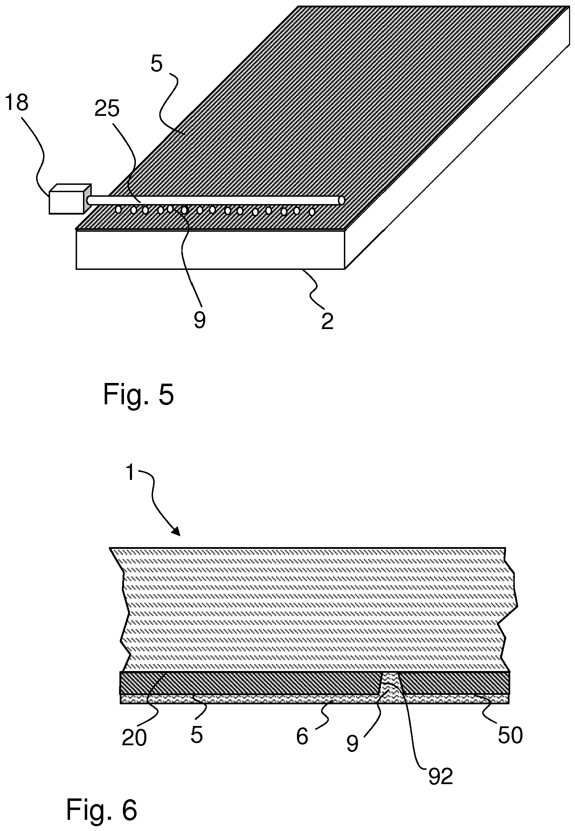

Neben einem Streuelement 17 ist auch ein seitenemittierender Lichtleiter zur Verteilung des vom Leuchtelement 18 abgestrahlten Lichts entlang der Öffnungen 9 geeignet. Fig. 5 zeigt hierzu ein Beispiel mit einer Vielzahl von Öffnungen 9 , so dass bei der Durchleuchtung der Öffnungen 9 der Eindruck eines linienförmigen Anzeigeelements entsteht. Entlang der Öffnungen 9 erstreckt sich ein seitenemittierender Lichtleiter 25. Dieser ist mit dem Leuchtelement 18 optisch gekoppelt, so dass das Licht des Leuchtelements 18 in den Lichtleiter 25 eingekoppelt wird. Der Lichtleiter 25 gibt das eingekoppelte Licht verteilt entlang seiner Längsrichtung und damit auch verteilt entlang der Öffnungen 9 wieder ab, so dass die Öffnungen 9 gleichmäßig ausgeleuchtet werden. Für diese Ausführungsform eignet sich neben einer Leuchtdiode als Leuchtelement auch eine Laserdiode. Mit einer solchen Laserdiode kann eine hohe Lichtintensität auch in einen dünnen Lichtleiter eingekoppelt werden. Dieser kann entsprechend nahe an der Öffnung angeordnet werden, so dass das Licht effizient auf die Öffnung gerichtet werden kann. Unabhängig von der Art der Lichtquelle ist die Ausführungsform mit einer seitenemittierenden Faser auch geeignet, Licht in Bereiche zu leiten, die im Betrieb des Haushaltsgerätes stark erwärmt werden, da hier das Leuchtelement selbst nicht im aufgeheizten Bereich angeordnet sein muss. Auf diese Weise ist es unter anderem möglich, innerhalb einer Kochzone leuchtende Anzeigeelemente zu schaffen.

Allgemein kann eine Beschichtung auf einem Glas- oder Glaskeramiksubstrat nicht nur dazu dienen, die Durchsicht zu verhindern. Darüber hinaus kann eine Beschichtung auch vorteilhaft sein, um die beschichtete Seite des Substrats zu versiegeln. Im Bereich der Öffnung 9 würde eine solche Versiegelung allerdings unterbrochen. Wird eine lichtdurchlässige Versiegelungsschicht verwendet, kann diese gemäß einer Ausführungsform der Erfindung auch nach dem Einfügen der Öffnung 9 aufgebracht werden und die Öffnung abdecken oder verschließen. Das Licht des Leuchtelements kann durch die transparente Versiegelung die Öffnung 9 weiterhin passieren.

Eine solche Weiterbildung der Erfindung, bei welcher die Öffnung 9 mit einer transparenten Versiegelungsschicht 6 verschlossen ist, zeigt Fig. 6. Die Versiegelung kann die Öffnung 9 abdecken und/oder, wie dargestellt, auch auffüllen. Als Versiegelungsschicht 6 eignen sich bspw. transparente Silikonschicht(en), silikonbasierte Schicht(en) oder transparente Sol-Gel-Schicht(en). Weiterhin ist es auch möglich, mit einer solchen Versiegelung ein Streuelement oder einen seitenemittierenden Lichtleiter oder auch das Leuchtelement im Bereich der Öffnung zu fixieren.

Unter einer Versiegelungsschicht, wie sie die Schicht 6 darstellt, wird eine Beschichtung verstanden, welche das Glas- oder Glaskeramikmaterial und/oder die blickdichte Beschichtung 5 gegenüber Umwelteinflüssen schützt. Diese Umwelteinflüsse können beispielsweise Kondensationsprodukte sein. So sollte die Versiegelung insgesamt dicht bspw. gegenüber flüssigen und ölhaltigen Substanzen sein, wie sie beispielsweise in Lebensmitteln vorkommen. Dringen solche Stoffe in die Beschichtung 5 ein, kann es zu sichtbaren, unschönen Veränderungen der optischen Anmutung kommen.

Auch die blickdichte Beschichtung 5 selbst kann eine Versiegelungsschicht sein, um die von der Beschichtung 5 bedeckte Oberfläche des Glases oder der Glaskeramik zu schützen.

Eine weitere Anwendung neben einer im ausgeschalteten Zustand nicht sichtbaren Beleuchtung ist auch die Herstellung einer unsichtbaren Markierung, die als Kennzeichen gegenüber Plagiaten dient. Will man feststellen, ob es sich bei einem bestimmten Glas- oder Glaskeramikartikel um Originalware handelt, kann dies durch eine Begutachtung des Artikels unter rückseitiger Beleuchtung dann leicht verifiziert werden. Demgemäß ist gemäß einem Aspekt der Erfindung die Verwendung einer Markierung in Form einer erfindungsgemäß hergestellten, vorzugsweise linienförmigen Öffnung 9 in der blickdichten Beschichtung 5 zur Herkunftskennzeichnung des Glas- oder Glaskeramikartikels vorgesehen.

Wie vorstehend ausgeführt stellt das Verhältnis aus ablatierter zur insgesamt behandelten Fläche einen Prozessparameter des erfindungsgemäßen Verfahrens dar. Ein zu hohes Verhältnis kann eine optische Veränderung der bearbeiteten Bereiche erzeugen. Hierzu kann ein Übergangsbereich mit gegenüber dem Kernbereich der behandelten Fläche reduziertem Verhältnis erzeugt werden. Diese Maßnahme ist jedoch für Bereiche mit sehr hellen und sehr dunklen Dekoren häufig nicht zufriedenstellend, da sich in diesen Fällen nicht immer ein ausreichender Deadfront-Effekt einstellt.

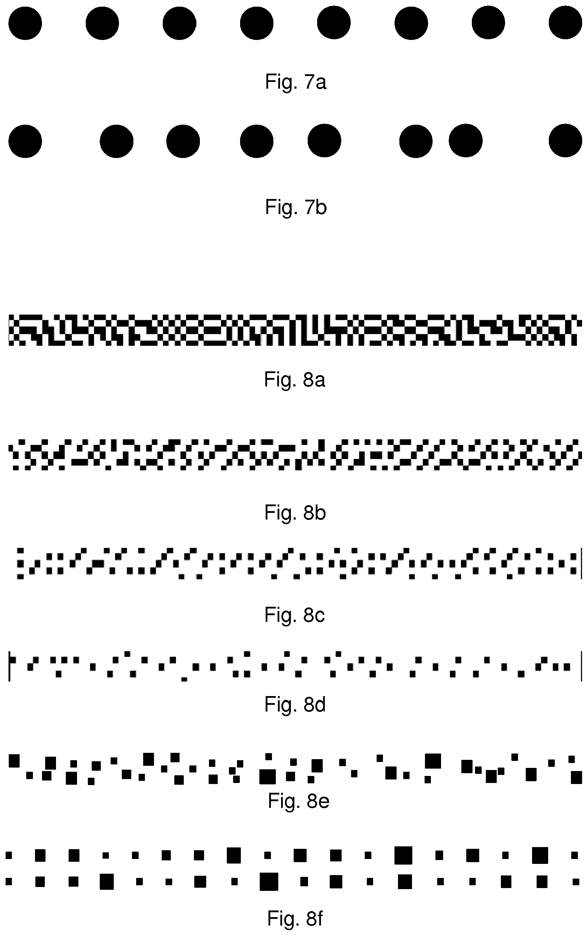

Eine Verbesserung des Deadfront-Effektes kann in Weiterbildung der Erfindung durch Dithering oder eine zufällige Verteilung der Größe und Position der Öffnungen 9, welche auch als stochastische oder irreguläre Verteilung bezeichnet wird, erzeugt werden. Hierbei wird der Abstand der Öffnungen 9 sowie ihre Größe nicht mehr über den gesamten bearbeiteten Bereich konstant gehalten, sondern variiert, wobei die Aussparung in eine Vielzahl kleinerer Bereiche aufgeteilt wird. Fig. 7a zeigt eine Zeile eines regulär angeordneten Rasters, während Fig. 7b eine Zeile eines irregulär angeordneten Rasters offenbart. Die Abstände zwischen den einzelnen Öffnungen 9 bzw. Punkten variieren hierbei in zufälliger Weise.

Die Fig. 8a bis 8d zeigen das Aussehen eines erfindungsgemäß mit Dithering behandelten Bereiches für verschiedene Verhältnisse aus ablatierter Fläche zur insgesamt behandelter Fläche. In Fig. 8a beträgt dieses Verhältnis 50%, in Fig. 8b 25%, in Fig. 8c 12,5% und in Fig. 8d 6,25%. Die Abstände zwischen den einzelnen Öffnungen 9 bzw. Punkten variieren hierbei statistisch, insbesondere in zufällig verteilter Weise.

Fig. 8e zeigt das Aussehen eines erfindungsgemäß mit Dithering behandelten Bereiches, bei welchem sowohl die Abstände als auch die Größe der Öffnungen 9 oder Punkte 9 statistisch, insbesondere in zufällig verteilter Weise variieren.

Fig. 8f zeigt das Aussehen eines erfindungsgemäß mit Dithering behandelten Bereiches, bei welchem lediglich die Größe der Öffnungen 9 oder Punkte 9 statistisch, insbesondere in zufällig verteilter Weise variieren.

Eine Punktgröße von 20µm kann im Falle des Einsatzes von Dithering sehr vorteilhaft sein, da dann auch Agglomerationen, dies bedeutet zufällig nahe zu einander angeordnete Öffnungen nicht mehr als Helligkeitsunterschied visuell erfasst werden.

Durch Dithering kann insgesamt eine verbesserte Displayfähigkeit des behandelten Glas- oder Glaskeramiksubstrats erzielt werden.

Werden einige feinere Raster überlagert, beispielsweise bei Displays mit regulär angeordneten Bildelementen (Pixeln) kann der optische Eindruck eines überlagerten gröberen Rasters entstehen. Dieser Moire-Effekt kann durch die Nutzung von Dithering reduziert oder häufig sogar vermieden werden.

Zur Erzeugung irregulärer Raster mittels Dithering werden als für das erfindungsgemäße Verfahren einsetzbare Laser bevorzugt Pulslaser mit ultrakurzen Pulsen mit einer Pulsdauer im Bereich einiger Picosekunden eingesetzt. Die Wellenlängen dieser Pulslaser liegen entweder im IR- oder im UV-Bereich.

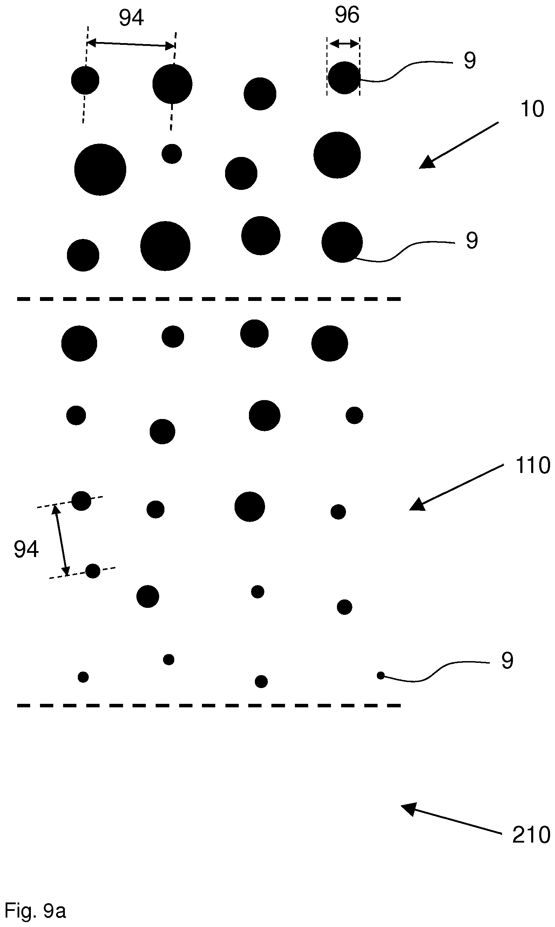

Fig. 9a zeigt eine nicht maßstabsgetreue Darstellung eines Ausschnitts eines Rasters mit punktförmigen Öffnungen 9. Das abgebildete Raster umfasst einen perforierten Kernbereich 10 sowie einen perforierten Übergangsbereich 110. In dem Übergangsbereich 110 ist der mittlere ablatierte Flächenanteil geringer ist als im Kernbereich 10. Darüber hinaus weist der Übergangsbereich 110 einen Gradienten auf, so dass der ablatierte Flächenanteil ausgehend vom Kernbereich 10 in Richtung zum nicht perforierten Bereich 210 hin abfällt. Die Öffnungen 9 weisen eine Größe 96 und einen Abstand 94 zueinander auf.

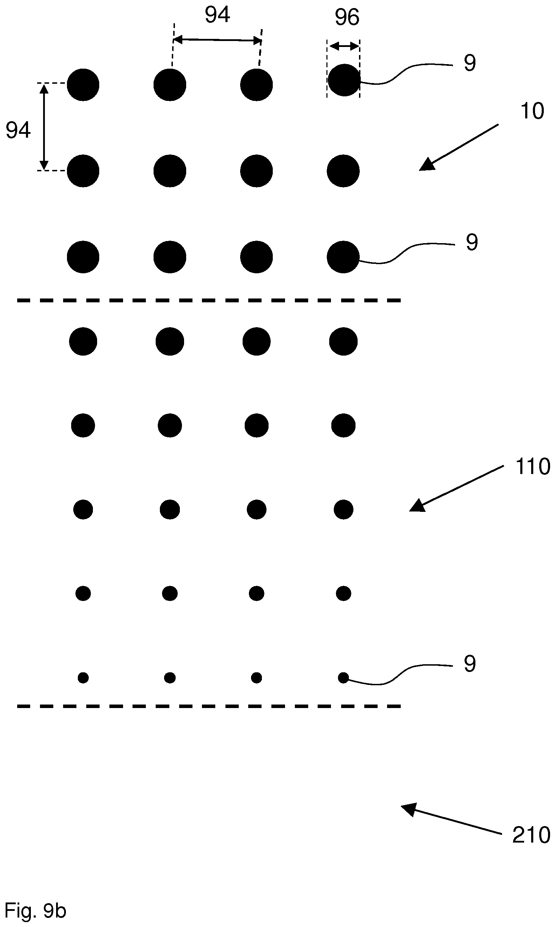

Fig. 9b zeigt schließlich eine weitere nicht maßstabsgetreue Darstellung eines Ausschnitts eines Rasters mit punktförmigen Öffnungen 9. Das abgebildete Raster umfasst einen perforierten Kernbereich 10 sowie einen perforierten Übergangsbereich 110. In dem perforiertem Kernbereich 10 bilden die punktförmigen Öffnungen 9 ein regelmäßiges Muster mit konstanten Größen 96 und Abständen 94 der Öffnungen 9. Im Übergangsbereich 110 ist der mittlere ablatierte Flächenanteil geringer als im Kernbereich 10. Darüber hinaus weist der Übergangsbereich 110 einen Gradienten auf, so dass der ablatierte Flächenanteil ausgehend vom Kernbereich 10 in Richtung zum nicht perforierten Bereich 210 hin abfällt.

Auch im Übergangsbereich 110 bilden die Öffnungen 9 ein regelmäßiges Muster.

**Bezugszeichenliste**

| | |
|---|---|
| 1 | Glas- oder Glaskeramikartikel |
| 2 | Flächiges Glas- oder Glaskeramiksubstrat |
| 3 | Haushaltsgerät |
| 5 | blickdichte Beschichtung |
| 7 | Gepulster Laserstrahl |
| 9 | Öffnungen oder Löcher in 5 |
| 10 | Perforierter Bereich |
| 11 | Vorrichtung zur Laserablation |
| 13 | Steuerungseinrichtung |
| 15 | Galvanometerscanner |
| 16 | X-Y-Tisch |
| 17 | Streuelement |
| 18 | Leuchtelement |
| 19 | Fokussieroptik |
| 20, 21 | Seitenfläche von 2 |
| 23 | Heizelement |
| 70 | Auftreffpunkt von 7 |
| 71 | Laser |
| 25 | Seitenemittierender Lichtleiter |
| 30 | Glaskeramik-Kochfeld |
| 91 | Breite von 9 am Substrat 2 |
| 50 | Oberfläche von 5 |
| 92 | Wandung von 9 |
| 93 | Winkel der Wandung 92 zur Senkrechten der Substratoberfläche |
| 94 | Abstand |
| 95 | Breite der Öffnung 9 an der Oberfläche 50 von 5 |
| 96 | Größe einer Öffnung |
| 110 | Perforierter Übergangsbereich |
| 210 | Nicht perforierter Bereich |

## Patentansprüche

1. Verfahren zur Herstellung eines Glas- oder Glaskeramikartikels (1), umfassend die Schritte
- Bereitstellen eines flächigen Glas- oder Glaskeramiksubstrats (2) mit zwei gegenüberliegenden Seitenflächen (20, 21), welches
- im sichtbaren Spektralbereich von 380 nm bis 780 nm eine Lichttransmission τᵥᵢₛ von mindestens 1%, bevorzugt mindestens 30% für sichtbares Licht aufweist, welches das Glas- oder Glaskeramiksubstrat (2) von einer Seitenfläche zur gegenüberliegenden Seitenfläche durchquert, wobei
- eine Seitenfläche des Glas- oder Glaskeramiksubstrats (2) mit einer blickdichten Beschichtung (5) versehen wird, welche im sichtbaren Spektralbereich von 380 nm bis 780 nm eine Lichttransmission τᵥᵢₛ von höchstens 5% aufweist, wobei
- ein gepulster Laserstrahl auf die blickdichte Beschichtung (5) gerichtet und durch Ablation die Beschichtung (5) mehrfach an verschiedenen Stellen lokal bis zur Oberfläche des Glas- oder Glaskeramikartikels entfernt und damit ein einen perforierten Bereich bildendes Raster einer Vielzahl von Öffnungen in der blickdichten Beschichtung (5) hergestellt wird, welches einen Kernbereich bildet, derart, dass die blickdichte Beschichtung im Bereich (10) des Rasters teiltransparent wird, wobei am Rande des perforierten Kernbereichs ein Übergangsbereich entwickelt wird, in dem weitere Öffnungen ablatiert werden, so dass der ablatierte Flächenanteil, beschrieben durch das Verhältnis aus ablatierter Fläche und nicht prozessierter Fläche innerhalb des Übergangsbereichs im Mittel kleiner als im Kernbereich ist, wobei der Abstand der Öffnungen voneinander kleiner als 200 µm und die Größe der Öffnungen kleiner als 30 µm, und wobei der ablatierte Flächenanteil des Kernbereiches größer als 0,5% ist.

2. Verfahren gemäß Anspruch 1, **dadurch gekennzeichnet, dass** die Öffnungen in verschiedenen Abständen voneinander angeordnet sind und/oder verschiedene Größen aufweisen.

3. Verfahren gemäß Anspruch 2, **dadurch gekennzeichnet, dass** die Abstände und/oder die Größe der Öffnungen stochastisch, somit zufällig verteilt variieren.

4. Verfahren gemäß Anspruch 1, **dadurch gekennzeichnet, dass** die Öffnungen die Gestalt kreisförmiger Punkte haben.

5. Verfahren gemäß einem der vorstehenden Ansprüche, **dadurch gekennzeichnet, dass** der Abstand der Öffnungen voneinander kleiner als 150 µm, besonders bevorzugt kleiner als 100 µm ist.

6. Verfahren gemäß einem der vorstehenden Ansprüche, **dadurch gekennzeichnet, dass** die Größe der Öffnungen kleiner als 20 µm ist.

7. Verfahren gemäß Anspruch 1, **dadurch gekennzeichnet, dass** der Flächenanteil im Übergangsbereich um <2%/mm reduziert wird.

8. Verfahren gemäß einem der vorstehenden Ansprüche, **dadurch gekennzeichnet, dass** dem Schritt des Perforierens ein Reinigungsschritt folgt, vorzugsweise mittels einer adhäsiven Rolle.

9. Verfahren gemäß einem der vorstehenden Ansprüche, **dadurch gekennzeichnet, dass** die Ablationsschwelle des Materials des Glas- oder Glaskeramikartikels (2)oberhalb einer Wellenlänge von 532 nm, insbesondere im infraroten Spektralbereich, bevorzugt bei einer Wellenlänge von 1064 nm höher ist, als die Ablationsschwelle der blickdichten Beschichtung (5).

10. Verfahren gemäß einem der vorstehenden Ansprüche, **dadurch gekennzeichnet, dass** die blickdichte Beschichtung (5) derart gewählt wird, dass sie eine Farbe mit einem L-Wert im L*a*b-Farbraum von mindestens 20, bevorzugt von mindestens 40, besonders bevorzugt von mindestens 50 hat.

11. Glas- oder Glaskeramikartikel, hergestellt mit einem Verfahren gemäß einem der vorstehenden Ansprüche, mit
- einem Glas- oder Glaskeramiksubstrat mit zwei gegenüberliegenden Seitenflächen (20, 21), wobei
- eine Seitenfläche (20, 21) des Glas- oder Glaskeramiksubstrats (2) mit einer blickdichten Beschichtung (5) versehen ist, welche im sichtbaren Spektralbereich von 380 nm bis 780 nm eine Lichttransmission τᵥᵢₛ von höchstens 5% aufweist, und wobei ein Bereich der blickdichten Beschichtung mit einem einen perforierten Bereich bildenden Raster von Öffnungen (9) versehen ist, welche den Durchtritt von auf die Oberfläche der Beschichtung (5) auftreffendem Licht durch die Beschichtung (5) und das Glas- oder Glaskeramiksubstrat gestattet, so dass dieser Kernbereich teiltransparent erscheint, wobei der Abstand der Öffnungen kleiner als 200 µm, bevorzugt kleiner als 150 µm, besonders bevorzugt kleiner als 100 µm ist, umfassend ferner einen Übergangsbereich am Rande des perforierten Kernbereichs, in dem weitere ablatierte Öffnungen vorhanden sind, so dass der ablatierte Flächenanteil , beschrieben durch das Verhältnis aus ablatierter Fläche und nicht prozessierter Fläche, innerhalb des Übergangsbereichs im Mittel kleiner als im Kernbereich ist.

12. Haushaltsgerät (3) mit einer Bedienfläche, welche durch den Glas- oder Glaskeramikartikel gemäß dem vorstehenden Anspruch gebildet wird, und wobei im Inneren des Haushaltsgeräts zumindest ein Leuchtelement angeordnet ist, so dass von diesem Leuchtelement abgestrahltes Licht auf die Öffnung (9) in der blickdichten Beschichtung (5) fällt und die Öffnung (9) und das Substrat durchqueren kann.

13. Haushaltsgerät gemäß dem vorstehenden Anspruch, wobei die blickdichte Beschichtung (5) auf der die Innenseite bildenden Seite (20) des Glas- oder Glaskeramikartikels aufgebracht ist.

14. Haushaltsgerät gemäß einem der zwei vorstehenden Ansprüche, **gekennzeichnet durch** zumindest eine Leuchtdiode oder Laserdiode als Leuchtelement (18).

## Claims

1. A method for producing a glass or glass ceramic article (1), comprising the steps of:
- providing a sheet-like glass or glass ceramic substrate (2) having two opposite faces (20, 21), which
- in the visible spectral range from 380 nm to 780 nm exhibits light transmittance τᵥᵢₛ of at least 1 %, preferably at least 30 % for visible light that passes across the glass or glass ceramic substrate (2) from one face to the opposite face;
- providing an opaque coating (5) on one face of the glass or glass ceramic substrate (2), which coating exhibits light transmittance τᵥᵢₛ of not more than 5 % in the visible spectral range from 380 nm to 780 nm; wherein
- a pulsed laser beam is directed onto the opaque coating (5) and the coating (5) is locally removed by ablation down to the surface of the glass or glass ceramic article, repeatedly at different locations, thereby producing a perforated area pattern of a multitude of openings in the opaque coating (5) defining a core area such that the opaque coating becomes semi-transparent in the area (10) of the pattern; wherein a transition area is created along a periphery of the perforated core area, where further openings are ablated such that the ablated percentage surface area defined by the ratio of ablated surface area to non-processed surface area is lower on average within the transition area than within the core area; wherein the openings are spaced from each other by less than 200 µm, and wherein the openings have a size of less than 30 µm, and wherein the ablated percentage surface area of the core area is greater than 0.5 %.

2. The method according to claim 1, **characterised in that** the openings are arranged at different spacings to each other, and/or have different sizes.

3. The method according to claim 2, **characterised in that** the spacings and/or the size of the openings vary stochastically, according to a random distribution.

4. The method according to claim 1, **characterised in that** the openings have a shape of circular dots.

5. The method according to any one of the preceding claim, **characterised in that** the openings are spaced from each other by less than 150 µm, more preferably by less than 100 µm.

6. The method according to any one of the preceding claim, **characterised in that** the openings have a size of less than 20 µm.

7. The method according to claim 1, **characterised in that** the percentage surface area is reduced by < 2 % per mm in the transition area.

8. The method according to any one of the preceding claim, **characterised in that** the step of perforating is followed by a cleaning step, preferably using an adhesive roller.

9. The method according to any one of the preceding claim, **characterised in that** the material of the glass or glass ceramic article (2) has an ablation threshold that is higher than the ablation threshold of the opaque coating (5), for a wavelength of more than 532 nm, in particular in the infrared spectral range, preferably at a wavelength of 1064 nm.

10. The method according to any one of the preceding claim, **characterised in that** the opaque coating (5) is selected so as to have a colour with an L value in the L*a*b colour space of at least 20, preferably at least 40, more preferably at least 50.

11. A glass or glass ceramic article,
produced by a method according to any one of the preceding claim, comprising
- a glass or glass ceramic substrate having two opposite faces (20, 21); wherein
- one face (20, 21) of the glass or glass ceramic substrate (2) is provided with an opaque coating (5) which exhibits a light transmittance τᵥᵢₛ of not more than 5 % in the visible spectral range from 380 nm to 780 nm; and wherein an area of the opaque coating is provided with a pattern of openings (9) defining a perforated area, which openings allow light that is incident onto the surface of the coating (5) to pass through the coating (5) and through the glass or glass ceramic substrate so that said core area appears to be semi-transparent; wherein the openings are spaced apart by less than 200 µm, preferably less than 150 µm, more preferably less than 100 µm; further comprising a transition area along the periphery of the perforated core area, which includes further ablated openings such that the ablated percentage surface area defined by the ratio of ablated surface area to non-processed surface area is lower on average within the transition area than within the core area.

12. A household appliance (3), comprising a control surface defined by the glass or glass ceramic article according to the preceding claim, and comprising at least one light-emitting element arranged in the interior of the household appliance, so that light emitted by said light-emitting element is incident on the opening (9) in the opaque coating (5) and is able to pass through the opening (9) and the substrate.

13. The household appliance according to the preceding claim, wherein the opaque coating (5) is applied on the face (20) of the glass or glass ceramic article facing the interior.

14. The household appliance according to any one of the two preceding claims, **characterised by** at least one light-emitting diode or laser diode as the light-emitting element (18).

## Revendications

1. Procédé de fabrication d'un article en verre ou en vitrocéramique (1), comprenant les étapes suivantes :
- mise en place d'un substrat en verre ou vitrocéramique (2) plat, comportant deux faces latérales (20, 21) opposées, qui
- présente, dans le domaine spectral visible allant de 380 nm à 780 nm, une transmission de lumière τᵥᵢₛ d'au moins 1 %, de préférence d'au moins 30 %, pour la lumière visible qui traverse le substrat en verre ou vitrocéramique (2) d'une face latérale jusqu'à la face latérale opposée, sachant que
- une face latérale du substrat en verre ou vitrocéramique (2) est dotée d'un revêtement opaque (5) qui présente, dans le domaine spectral visible allant de 380 nm à 780 nm, une transmission de lumière τᵥᵢₛ d'au maximum 5 %, sachant que
- un faisceau laser pulsé est dirigé sur le revêtement opaque (5), et le revêtement (5) est enlevé plusieurs fois à différents endroits par ablation, localement jusqu'à la surface de l'article en verre ou vitrocéramique, et de ce fait un réseau avec une multitude d'ouvertures, formant une zone perforée, est réalisé dans le revêtement opaque (5), réseau qui forme une zone centrale, de telle sorte que le revêtement opaque devient partiellement transparent dans la région (10) du réseau, sachant que sur le bord de la zone centrale perforée, on crée une zone de transition dans laquelle on procède à l'ablation d'autres ouvertures, de sorte que la partie de surface ablatée, qui est décrite par le rapport entre la surface ablatée et la surface non traitée, est en moyenne plus petite dans la zone de transition que dans la zone centrale, l'espacement entre les ouvertures étant inférieur à 200 µm, et la taille des ouvertures étant inférieure à 30 µm, et la partie de surface ablatée de la zone centrale étant supérieure à 0,5 %.

2. Procédé selon la revendication 1, **caractérisé en ce que** les ouvertures sont placées à des distances différentes les unes par rapport aux autres et/ou présentent des tailles différentes.

3. Procédé selon la revendication 2, **caractérisé en ce que** les espacements et/ou les tailles des ouvertures varient de façon stochastique et donc avec une répartition aléatoire.

4. Procédé selon la revendication 1, **caractérisé en ce que** les ouvertures ont la forme de points circulaires.

5. Procédé selon l'une des revendications précédentes, **caractérisé en ce que** l'espacement des ouvertures entre elles est inférieur à 150 µm et de façon particulièrement avantageuse inférieur à 100 µm.

6. Procédé selon l'une des revendications précédentes, **caractérisé en ce que** la taille des ouvertures est inférieure à 20 µm.

7. Procédé selon la revendication 1, **caractérisé en ce que** dans la zone de transition, la partie de surface est réduite de < 2 %/mm

8. Procédé selon l'une des revendications précédentes, **caractérisé en ce que** l'étape de perforation est suivie d'une étape de nettoyage, de préférence à l'aide d'un rouleau adhésif.

9. Procédé selon l'une des revendications précédentes, **caractérisé en ce que**, au-dessus d'une longueur d'onde de 532 nm, notamment dans le domaine spectral infrarouge, de préférence à une longueur d'onde de 1 064 nm, le seuil d'ablation de la matière de l'article en verre ou en vitrocéramique (2) est supérieur au seuil d'ablation du revêtement opaque (5).

10. Procédé selon l'une des revendications précédentes, **caractérisé en ce que** le revêtement opaque (5) est choisi de manière à avoir une couleur avec une valeur L, dans l'espace chromatique L*a*b, d'au moins 20, de préférence d'au moins 40, et de façon particulièrement avantageuse d'au moins 50.

11. Article en verre ou en vitrocéramique, réalisé avec un procédé selon l'une des revendications précédentes, comprenant
- un substrat en verre ou vitrocéramique (2) comportant deux faces latérales (20, 21) opposées, sachant que
- une face latérale (20, 21) du substrat en verre ou vitrocéramique (2) est dotée d'un revêtement opaque (5) qui présente, dans le domaine spectral visible allant de 380 nm à 780 nm, une transmission de lumière τᵥᵢₛ d'au maximum 5 %, et sachant qu'une région du revêtement opaque est dotée d'un réseau d'ouvertures (9) formant une zone perforée qui permet à la lumière arrivant sur la surface du revêtement (5) de traverser le revêtement (5) et le substrat en verre ou vitrocéramique, de sorte que cette zone centrale paraît partiellement transparente, l'espacement entre les ouvertures étant inférieur à 200 µm, de préférence inférieur à 150 µm, et de façon particulièrement avantageuse inférieur à 10 µm, comprenant en outre une zone de transition sur le bord de la zone centrale perforée, dans laquelle se trouvent des ouvertures d'ablation supplémentaires, de sorte que la partie de surface ablatée, qui est décrite par le rapport entre la surface ablatée et la surface non traitée, est en moyenne plus petite dans la zone de transition que dans la zone centrale.

12. Appareil ménager (3) doté d'une surface de commande qui est constituée de l'article en verre ou en vitrocéramique (2) selon la revendication précédente, sachant qu'à l'intérieur de l'appareil ménager il est prévu au moins un élément lumineux, de sorte que la lumière émise par cet élément lumineux arrive sur l'ouverture (9) dans le revêtement opaque (5) et peut traverser l'ouverture (9) et le substrat.

13. Appareil ménager selon la revendication précédente, où le revêtement opaque (5) est appliqué sur la face (20) de l'article en verre ou en vitrocéramique (2) qui forme la face interne.

14. Appareil ménager selon l'une des deux revendications précédentes, **caractérisé en ce qu'**il comporte au moins une diode électroluminescente ou une diode laser en tant qu'élément lumineux (18).
